# EUROPÄISCHE PATENTSCHRIFT

(11) **EP 3 762 692 B1**
(45) Veröffentlichungstag und Bekanntmachung des Hinweises auf die Patenterteilung: **27.12.2023**
(21) Anmeldenummer: 19707736.5
(22) Anmeldetag: 20.02.2019
(51) Int. Cl.: G01J 1/42, G01J 1/04, B23K 26/03

(54) **VORRICHTUNG ZUR BESTIMMUNG EINER FOKUSLAGE IN EINEM LASERBEARBEITUNGSSYSTEM, LASERBEARBEITUNGSSYSTEM MIT DERSELBEN UND VERFAHREN ZUR BESTIMMUNG EINER FOKUSLAGE IN EINEM LASERBEARBEITUNGSSYSTEM**
DEVICE FOR DETERMINING A FOCUS POSITION IN A LASER MACHINING SYSTEM, LASER MACHINING SYSTEM COMPRISING SAME, AND METHOD FOR DETERMINING A FOCUS POSITION IN A LASER MACHINING SYSTEM
DISPOSITIF PERMETTANT DE DÉTERMINER L'EMPLACEMENT D'UN POINT FOCAL DANS UN SYSTÈME DE TRAITEMENT AU LASER, SYSTÈME DE TRAITEMENT AU LASER LE COMPRENANT ET PROCÉDÉ PERMETTANT DE DÉTERMINER L'EMPLACEMENT D'UN POINT FOCAL DANS UN SYSTÈME DE TRAITEMENT AU LASER

(30) Priorität: 08.03.2018 DE 102018105319
(43) Veröffentlichungstag der Anmeldung: 13.01.2021
(73) Patentinhaber: Precitec GmbH & Co. KG, 76571 Gaggenau-Bad Rotenfels (DE)
(72) Erfinder: BLÁZQUEZ SÁNCHEZ, David, 76571 Gaggenau (DE)
(74) Vertreter: Ter Meer Steinmeister & Partner
(86) Internationale Anmeldenummer: PCT/EP2019/054141
(87) Internationale Veröffentlichungsnummer: WO 2019/170411

(56) Entgegenhaltungen:
- WO-A1-2015/185152
- DE-A1- 10 329 744
- DE-A1-102007 053 632
- DE-A1-102011 007 176

## Beschreibung

Die vorliegende Offenbarung betrifft eine Vorrichtung zur Bestimmung einer Fokuslage eines Laserstrahls in einem Laserbearbeitungssystem, ein Laserbearbeitungssystem mit einer solchen Vorrichtung und ein Verfahren zur Bestimmung einer Fokuslage eines Laserstrahls in einem Laserbearbeitungssystem. Die vorliegende Offenbarung betrifft insbesondere eine Vorrichtung und ein Verfahren zum Bestimmen einer Fokuslage eines Bearbeitungslaserstrahls in Echtzeit.

### Stand der Technik

In einer Vorrichtung zur Materialbearbeitung mittels Laser, z.B. in einem Laserbearbeitungskopf etwa zum Laserschweißen oder Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimator-Optik und einer Fokussierungsoptik verwendet, wobei das Laserlicht über eine Lichtleitfaser zugeführt wird.

Ein Problem bei der Lasermaterialbearbeitung ist die sogenannte "thermische Linse", die auf die Erwärmung von optischen Elementen zur Laserstrahlrührung und -fokussierung durch die Laserleistung, insbesondere im Multi-Kilowatt-Bereich und auf die Temperaturabhängigkeit der Brechzahl optischer Gläser zurückzuführen ist. Die thermische Linse führt bei der Lasermaterialbearbeitung zu einer Fokusverschiebung entlang der Strahlausbreitungsrichtung, die sich negativ auf die Bearbeitungsqualität auswirken kann.

Während des Lasermaterialbearbeitungsprozesses treten in erster Linie zwei Mechanismen auf, die zu einer Erwärmung der optischen Elemente führen. Ursächlich hierfür sind zum einen eine Erhöhung der Laserleistung und zum anderen eine Verschmutzung der optischen Elemente. Weiterhin ist es möglich, dass die optischen Elemente eine mechanische Deformation erfahren, die zu einer Änderung der Brechkraft führt. Die mechanische Deformation kann beispielsweise durch eine thermische Ausdehnung der Fassung der optischen Elemente hervorgerufen werden.

Um eine qualitativ hochwertige Laserbearbeitung sicher zu stellen, ist es erforderlich, die jeweilige Fokuslage zu erfassen und die Fokuslagenverschiebung auszugleichen, also eine schnelle und genaue Fokuslagenregelung bereitzustellen.

Die DE 10 2011 007 176 A1 beschreibt eine Vorrichtung zur Fokussierung eines Laserstrahls auf ein Werkstück, die mindestens ein transmissives optisches Element, das bezüglich einer Ebene senkrecht zur Strahlachse des Laserstrahls unter einem Kippwinkel angeordnet ist, und einen ortsauflösenden Detektor zur Erfassung von an dem transmissiven optischen Element rückreflektierter Laserstrahlung umfasst. Aus dem vom Detektor erfassten Bild wird von einer Bildauswerteeinrichtung die Größe oder der Durchmesser der rückreflektierten Laserstrahlung auf dem Detektor ermittelt, aus der bzw. dem wiederum zur Fokuslagenregelung die Fokusposition bestimmt werden kann.

DE 10 2007 053 632 A1 offenbart ein Verfahren zur Strahlanalyse, dadurch gekennzeichnet, dass an einer lotrecht zum Hauptstrahl befindlichen optischen Fläche ein definierten Prozentsatz des Strahles koaxial oder unter einem geringen Winkel rückreflektiert wird und dieser Teilstrahl durch ein Strahlteiler vom Hauptstrahl separiert wird, wo er zur Strahlanalyse zur Verfügung steht.

WO 2015/185152 A1 offenbart eine Einrichtung zur Überwachung eines Laserstrahls, umfassend: ein transmittierendes optisches Element, insbesondere eine Planplatte, dessen Normalenrichtung zur Strahlachse des Laserstrahls unter einem Kippwinkel ausgerichtet ist, sowie einen ortsauflösenden Detektor zur Erfassung von an dem optischen Element rückreflektierter Laserstrahlung.

DE 103 29 744 A1 offenbart ein Verfahren zur Bestimmung einer Fokuslage eines Laserstrahls bezüglich einer Werkstückoberfläche. Dabei wird die durch den Laserstrahl auf der Festkörperoberfläche erzeugte Leuchtscheibe mittels einer Kamera aufgenommen und mindestens ein Merkmal der Leuchtscheibe aus dem aufgenommenen Bild ausgewählt. Ein Vergleich des Merkmals mit gespeicherten Referenzwerten liefert die Fokuslage des Laserstrahls.

Eine thermische Linse (d.h. eine thermisch induzierte Brechkraft bzw. Brechkraftänderung) führt allerdings nicht nur zu einer Fokusverschiebung, sondern auch zu einer Verschlechterung der Strahlqualität, und kann beispielsweise Abbildungsfehler verursachen. Dies hat eine Änderung der gesamten Strahlkaustik, wie z.B. eines Fokusdurchmessers, zur Folge. Die Ermittlung der Fokuslage durch einen einfachen Vergleich mit Referenzwerten ist deswegen unpräzise. Insbesondere kann dies keine Vermessung der Fokuslage in Echtzeit darstellen.

### Offenbarung der Erfindung

Es ist eine Aufgabe der vorliegenden Offenbarung, eine Vorrichtung zur Bestimmung einer Fokuslage in einem Laserbearbeitungssystem, ein Laserbearbeitungssystem mit einer solchen Vorrichtung und ein Verfahren zur Bestimmung einer Fokuslage eines Laserstrahls in einem Laserbearbeitungssystem anzugeben, die eine Fokuslage eines Laserstahls zuverlässig bestimmen können. Insbesondere ist es eine Aufgabe der vorliegenden Offenbarung, eine Fokuslage eines Laserstrahls während eines Laserbearbeitungsprozesses in Echtzeit zu bestimmen.

Diese Aufgabe wird durch den Gegenstand der unabhängigen Ansprüche gelöst. Vorteilhafte Ausgestaltungen der Erfindung sind in den abhängigen Ansprüchen angegeben.

Gemäß der beanspruchten Erfindung ist eine Vorrichtung zur Bestimmung einer Fokuslage eines Laserstrahls in einem Laserbearbeitungssystem angegeben. Die Vorrichtung umfasst mindestens zwei Flächen von mindestens einem optischen Element, die jeweils für eine Reflektion eines Teils des Laserstrahls zum Auskoppeln eines Substrahls eingerichtet sind, wobei die wenigstens zwei Substrahlen einschließlich eines ersten Substrahls und eines zweiten Substrahls im Wesentlichen koaxial überlagert sind; einen ortsauflösenden Sensor zur Erfassung einer Intensitätsverteilung der überlagerten Substrahlen, und eine Auswerteeinheit, die eingerichtet ist, um basierend auf der vom ortsauflösenden Sensor erfassten Intensitätsverteilung der überlagerten Substrahlen Durchmesser der Substrahlen zu bestimmen, und basierend auf den Durchmessern der Substrahlen eine Fokuslage des Laserstrahls zu bestimmen.

Durch Erfassung und Auswertung der Intensitätsverteilung wenigstens zweier überlagerter Rückreflexe bzw. der wenigstens zwei Substrahlen erfolgen zwei Messungen zeitgleich, die zwei unterschiedlichen Positionen entlang der Strahlachse entsprechen. Eine Anzahl der Substrahlen, z.B. in der Intensitätsverteilung, kann bekannt sein. Ebenso kann eine optische Weglänge eines Substrahls und/oder Differenzen zwischen den optischen Weglängen der Substrahlen bekannt sein. Aus der Intensitätsverteilung können Strahldurchmesser der Substrahlen ermittelt werden. Ein Abstand zwischen den Strahldurchmessem kann einer Differenz zwischen den optischen Weglängen der Substrahlen entsprechen. Daraus kann mit Hilfe eines Modells bzw. einer Funktion eine Strahlkaustik des Laserstrahls ermittelt werden. Anstelle einer Intensitätsverteilung sind auch Messungen anderer Parameter der Substrahlen durch den ortsauflösenden Sensor denkbar.

Der Sensor muss sich nicht an einer der Fokuslage entsprechenden Position befinden, sondem kann unabhängig von der Fokuslage positioniert werden.

Bevorzugte, optionale Ausführungsformen und besondere Aspekte der Offenbarung ergeben sich aus den abhängigen Ansprüchen, den Zeichnungen und der vorliegenden Beschreibung.

Erfindungsgemäß werden mindestens ein optisches Element oder mindestens zwei optische Elemente verwendet, um mindestens zwei im Wesentlichen koaxiale Rückreflexe aus dem Strahlengang des Laserstrahls auszukoppeln. Die koaxialen Rückreflexe werden auf einen ortsauflösenden Sensor gelenkt, wobei aus den vom ortsauflösenden Sensor gemessenen Daten eine Fokuslage des Laserstrahls in Echtzeit (online) bestimmt werden kann. Insbesondere kann ein Modell bzw. eine Modellfunktion verwendet werden, um die Strahlkaustik auszuwerten und einen Schluss auf die Fokuslage zu ziehen.

Vorzugsweise sind das erste optische Element und/oder das zweite optische Element transmissive optische Elemente. Das transmissive optische Element kann für eine Transmission eines ersten Teils des Laserstrahls und eine Reflektion wenigstens eines zweiten Teils des Laserstrahls eingerichtet sein. Der beispielsweise von einer Fläche des Elements reflektierte zweite Teil des Laserstrahls kann den ersten Substrahl bzw. den zweiten Substrahl bilden. Damit wird ein Teil des Laserstrahls, der ein Bearbeitungslaserstrahl sein kann, aus dem Strahlengang ausgekoppelt und für eine Bestimmung der Fokuslage des Laserstrahls verwendet.

Vorzugsweise sind das erste optische Element und das zweite optische Element aufeinanderfolgend im Strahlengang des Laserstrahls angeordnet, und insbesondere unmittelbar aufeinanderfolgend. Das erste optische Element und das zweite optische Element können parallel zueinander und senkrecht zu einer optischen Achse angeordnet sein. Das erste optische Element und das zweite optische Element können separate optische Elemente sein, die beabstandet voneinander entlang des Strahlengangs angeordnet sind. Durch die beiden separaten optischen Elemente können der erste Substrahl und der zweite Substrahl im Wesentlichen koaxial zueinander ausgerichtet sein.

Das erste optische Element und das zweite optische Element können gemäß Ausführungsformen in einem Fokusbereich des Laserstrahls angeordnet sein. Insbesondere können das erste optische Element und das zweite optische Element zwischen einer Fokussier-Optik und einer Fokuslage (oder einem Bearbeitungsbereich des Laserstrahls, wie beispielsweise einem Werkstück) angeordnet sein.

Vorzugsweise sind das erste optische Element und/oder das zweite optische Element Schutzgläser. Die Schutzgläser können strahlausgangsseitig an einem Laserbearbeitungssystem, wie beispielsweise einem Laserbearbeitungskopf, angeordnet sein. Die Schutzgläser können vorhanden sein, um die (optischen) Elemente innerhalb des Laserbearbeitungssystems, und insbesondere die Fokussier-Optik, vor Verschmutzungen zu schützen, die z.B. durch Spritzer oder Schmauch verursacht werden können.

Typischerweise weist das erste optische Element eine erste Fläche und eine der ersten Fläche gegenüberliegende zweite Fläche auf, wobei der erste Substrahl von der ersten Fläche reflektiert wird. Das erste optische Element kann eingerichtet sein, dass die zweite Fläche des ersten optischen Elements einen dritten Substrahl reflektiert. Damit wird von den beiden gegenüberliegenden Flächen des ersten optischen Elements jeweils ein Rückreflex erzeugt, die auf den ortsauflösenden Sensor gelenkt werden können.

Typischerweise weist das zweite optische Element eine erste Fläche und eine der ersten Fläche gegenüberliegende zweite Fläche auf, wobei der zweite Substrahl von der ersten Fläche reflektiert wird. Das zweite optische Element kann eingerichtet sein, dass die zweite Fläche des zweiten optischen Elements einen vierten Substrahl reflektiert. Damit wird von den beiden gegenüberliegenden Flächen des zweiten optischen Elements jeweils ein Rückreflex erzeugt, die auf den ortsauflösenden Sensor gelenkt werden können.

Eine oder mehrere Flächen des mindestens einen optischen Elements kann beschichtet sein, um Reflektionen zu verstärken oder zu verringern. Beispielsweise kann ein optisches Element eine erste Fläche und eine zweite Fläche aufweisen, wobei mindestens eine der zwei Flächen eine Reflektion verstärkende oder verringernde Beschichtung aufweist. Dadurch kann ein (verringerter) Rückreflex einer der Flächen gegenüber einem (verstärkten) Rückreflex einer anderen Fläche vemachlässigbar sein. Durch solche Beschichtungen kann eine Anzahl von Substrahlen, die zur Bestimmung der Fokuslage berücksichtigt bzw. verwendet werden, eingestellt werden.

Gemäß Ausführungsformen ist die Auswerteeinheit eingerichtet, um basierend auf einer Lage und/oder einer Ausdehnung wenigstens des ersten Substrahls und des zweiten Substrahls auf dem ortsauflösenden Sensor die Fokuslage des Laserstrahls zu bestimmen. Beispielsweise kann die Auswerteeinheit eingerichtet sein, um mittels eines Modells bzw. einer Modellfunktion durch den ortsauflösenden Sensor gemessene Strahleigenschaften zu charakterisieren, um daraus die Fokuslage des Laserstrahls abzuleiten. Insbesondere kann aus einem Durchmesser des ersten Substrahls und des zweiten Substrahls mittels der Modellfunktion (z.B. durch einen Fit) eine Fokuslage bestimmt werden. Die Modellfünktion kann eine Fitfunktion zur Ermittlung einer Strahlkaustik des Laserstrahls umfassen.

Vorzugsweise werden für die Bestimmung der Fokuslage wenigstens vier Rückreflexe der beiden optischen Elemente verwendet, nämlich der erste Substrahl und der dritte Substrahl des ersten optischen Elements sowie der zweite Substrahl und der vierte Substrahl des zweiten optischen Elements. Insbesondere können die Durchmesser der vier Rückreflexe mittels der Modellfunktion ausgewertet werden, um die Strahlkaustik auszuwerten, zum Beispiel durch einen Fit einer Sollposition aus dem Modell und gemessenen Durchmessern.

In einigen Ausführungsformen umfasst die Vorrichtung einen Strahlteiler im Strahlengang des Laserstrahls, der für eine Transmission des Laserstrahls und eine Reflektion wenigstens des ersten Substrahls und des zweiten Substrahls (und optional des dritten Substrahls und des vierten Substrahls) zum ortsauflösenden Sensor hin eingerichtet ist. Der Strahlteiler kann ein teildurchlässiger Spiegel sein. Der Strahlteiler kann bezüglich einer optischen Achse des Laserbearbeitungssystems verkippt angeordnet sein, um die Rückreflexe vom Strahlengang des Laserstrahls wegzulenken. Beispielsweise kann der Strahlteiler um etwa 45° bezüglich der optischen Achse verkippt sein, um die Rückreflexe im Wesentlichen senkrecht zum Strahlengang des Laserstrahls bzw. zur optischen Achse des Laserbearbeitungssystems auszukoppeln.

Gemäß Ausführungsfonnen kann die Vorrichtung eine Optik zum Abbilden des ersten Substrahls und des zweiten Substrahls (und optional des dritten Substrahls und des vierten Substrahls) auf den ortsauflösenden Sensor aufweisen.

Vorzugsweise umfasst die Vorrichtung wenigstens einen optischen Filter für den ersten Substrahl und den zweiten Substrahl (und optional den dritten Substrahl und den vierten Substrahl). Der optische Filter kann die Rückreflexe optisch Filtern, so dass für die Detektion geeignete bzw. optimale Wellenlängen oder Wellenlängenbereiche den ortsauflösenden Sensor erreichen. Hierdurch kann beispielsweise ein Untergrund oder ein Rauschen im Sensorsignal reduziert werden. Alternativ oder zusätzlich kann auch ein Filter verwendet werden, um eine Signalstärke auf dem Sensor anzupassen, wie z.B. ein abschwächender Filter.

Gemäß einem weiteren Aspekt der vorliegenden Offenbarung ist ein Laserbearbeitungssystem angegeben. Das Laserbearbeitungssystem umfasst eine Laservorrichtung zum Bereitstellen eines Laserstrahls, eine Fokussier-Optik zum Fokussieren des Laserstrahls auf ein Werkstück und die zuvor beschriebene Vorrichtung zur Bestimmung einer Fokuslage eines Laserstrahls in einem Laserbearbeitungssystem. Das Laserbearbeitungssystem kann ein Laserschneidkopf oder ein Laserschweißkopf sein.

Vorzugsweise umfasst das Laserbearbeitungssystem eine Kollimator-Optik zum Kollimieren des von der Laservorrichtung bereitgestellten Laserstrahls. Insbesondere können das erste optische Element und das zweite optische Element der Vorrichtung zur Bestimmung einer Fokuslage in einem Fokusbereich der Fokussier-Optik, also im Strahlengang nach der Fokussier-Optik, angeordnet sein. Der Strahlteiler kann im Strahlengang des Laserstrahls zwischen der Fokussier-Optik und der Kollimator-Optik angeordnet sein.

Gemäß der beanspruchten Erfindung ist ein Verfahren zur Bestimmung einer Fokuslage eines Laserstrahls in einem Laserbearbeitungssystem angegeben, umfassend die Schritte: Auskoppeln zumindest eines ersten und eines zweiten Substrahls von mindestens einem optischen Element, das in einem Strahlengang des Laserstrahls angeordnet ist; wobei der erste Substrahl und der zweite Substrahl im Wesentlichen koaxial überlagert sind; Erfassen einer ortsaufgelösten Intensitätsverteilung der überlagerten Substrahlen Bestimmen von Durchmessern der Substrahlen basierend auf der erfassten ortsaufgelösten Intensitätsverteilung der überlagerten Substrahlen und Bestimmen einer Fokuslage des Laserstrahls basierend auf den bestimmten Durchmessern der Substrahlen. Der erste und zweite Rückreflex bzw. reflektierte Substrahl kann an verschiedenen Flächen (d.h. Oberflächen) ein und desselben optischen Elements erfolgen, oder an Flächen von zwei verschiedenen optischen Elementen. Es können auch mehr als zwei Rückreflexe von verschiedenen Flächen von mehr als einem optischen Element verwendet werden. Dies kann eine Genauigkeit der Fokuslagenbestimmung erhöhen.

Vorzugsweise umfasst das Verfahren ferner: Anpassen bzw. Regeln der Fokuslage basierend auf der bestimmten Fokuslage, optional unter Verwendung einer Soll-Fokuslage.

Das Verfahren kann die Merkmale und Eigenschaften der Vorrichtung zur Bestimmung einer Fokuslage eines Laserstrahls in einem Laserbearbeitungssystem und des Laserbearbeitungssystems gemäß den hier beschriebenen Ausführungsformen umfassen und implementieren.

Aus der Intensitätsverteilung können Strahldurchmesser des ersten und zweiten Substrahls bestimmt werden, die zur Bestimmung der Fokuslage verwendet werden. Zur Bestimmung der Fokuslage kann ferner eine Funktion bzw. ein Modell für eine Strahlkaustik verwendet werden, um eine Änderung eines Strahldurchmessers in Abhängigkeit einer Position entlang einer Strahlausbreitungsrichtung zu beschreiben. Eine Anzahl von Rückreflexen bzw. Substrahlen, die zur Bestimmung der Fokuslage verwendet werden, kann vorher bekannt bzw. festgelegt sein. Auch ein Abstand zwischen den Flächen, an denen die Substrahlen ausgekoppelt werden, d.h. an denen die Rückreflexe entstehen, kann bekannt bzw. festgelegt sein. Der Abstand kann beispielsweise einer Dicke des mindestens einen optischen Elements oder einem Abstand zwischen mehreren optischen Elementen oder einer Kombination davon entsprechen. Daraus kann ein Abstand zwischen ermittelten Strahldurchmessem des ersten und zweiten Substrahls ermittelt werden.

### Kurze Beschreibung der Zeichnungen

Ausführungsbeispiele der Offenbarung sind in den Figuren dargestellt und werden im Folgenden näher beschrieben. Es zeigen:
Figur 1 ein Laserbearbeitungssystem mit einer Vorrichtung zur Bestimmung einer Fokuslage eines Laserstrahls in einem Laserbearbeitungssystem gemäß Ausführungsformen der vorliegenden Offenbarung,
Figur 2 die Vorrichtung zur Bestimmung einer Fokuslage eines Laserstrahls in einem Laserbearbeitungssystem sowie eine Fokussier-Optik des Laserbearbeitungssystems gemäß Ausführungsformen der vorliegenden Offenbarung,
Figur 3 Simulationen von ausgekoppelten Rückreflexen des Laserstrahls, die mit einem ortsauflösenden Detektor der Vorrichtung zur Bestimmung einer Fokuslage eines Laserstrahls in einem Laserbearbeitungssystem gemäß den Ausführungsformen der vorliegenden Offenbarung aufgenommen wurden,
Figuren 4A und B Auswertungen der Simulationen der Figur 3,
Figur 5 Simulationen von ausgekoppelten Rückreflexen des Laserstrahls, die mit einem ortsauflösenden Detektor der Vorrichtung zur Bestimmung einer Fokuslage eines Laserstrahls in einem Laserbearbeitungssystem aufgenommen wurden, für eine andere Fokuslage bzw. Kollimationslage,
Figuren 6A und B Auswertungen der Simulationen der Figur 5, und
Figur 7 eine schematische Strahlkaustik eines Laserstrahls.

### Ausführungsformen der Offenbarung

Im Folgenden werden, sofern nicht anders vermerkt, für gleiche und gleichwirkende Elemente gleiche Bezugszeichen verwendet.

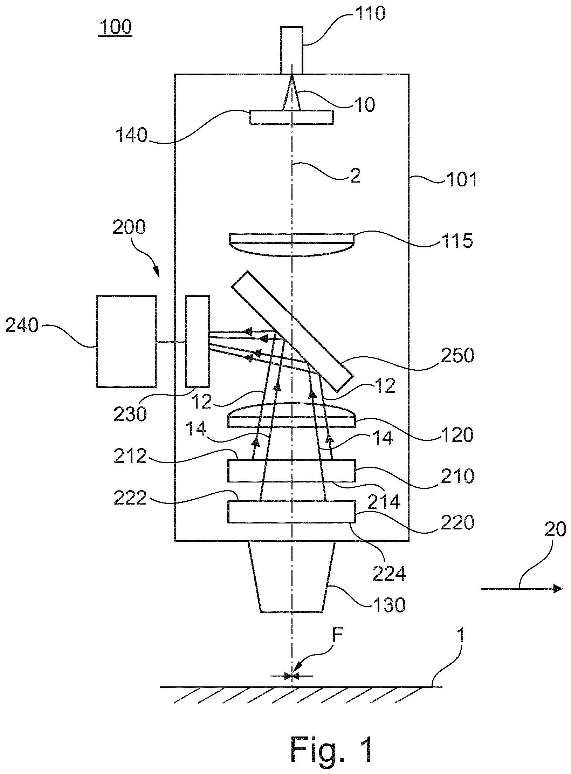

Figur 1 zeigt ein Laserbearbeitungssystem 100 gemäß Ausführungsformen der vorliegenden Offenbarung. Das Laserbearbeitungssystem 100 kann einen Bearbeitungskopf 101, wie beispielsweise einen Schneidkopf oder einen Schweißkopf, umfassen. Figur 1 zeigt beispielhaft einen geraden Aufbau des Laserbearbeitungssystems 100 bzw. des Strahlengangs des Laserstrahls 10. Es kann aber selbstverständlich auch ein gewinkelter Aufbau, z.B. mit einem Winkel von 90° gewählt werden. Zum Zwecke der Übersichtlichkeit ist der Laserstrahl 10 lediglich angedeutet und sein Strahlengang nicht vollständig dargestellt.

Das Laserbearbeitungssystem 100 umfasst eine Laservorrichtung 110 zum Bereitstellen eines Laserstahls 10 (auch als "Bearbeitungsstrahl" oder "Bearbeitungslaserstrahl" bezeichnet). Die Laservorrichtung 110 kann eine Lichtleitfaser umfassen oder eine Lichtleitfaser sein, über die der Laserstrahl 10 in den Bearbeitungskopf 101 geführt wird. Das Laserbearbeitungssystem 100 kann eine Kollimator-Optik 115, wie beispielsweise eine Kollimatorlinse oder ein Zoomsystem mit mehreren Linsen, zur Kollimation des Laserstrahls 10 aufweisen. Der Laserstrahl 10 kann von der Laservorrichtung 110 über eine optionale optische Vorrichtung 140, die ein Schutzglas vor der Kollimator-Optik, eine Linse oder eine Blende oder Kombinationen davon sein kann, zur Kollimator-Optik 115 laufen.

Typischerweise umfasst das Laserbearbeitungssystem 100 eine Fokussier-Optik 120, wie beispielsweise eine Fokuslinse, zur Fokussierung des Laserstrahls 10 auf ein Werkstück 1. Die Kollimator-Optik 115 und die Fokussier-Optik 120 können in den Bearbeitungskopf 101 integriert sein. Beispielsweise kann der Bearbeitungskopf 101 ein Kollimator-Modul umfassen, das in den Bearbeitungskopf 101 integriert oder am Bearbeitungskopf 101 montiert ist.

Das Laserbearbeitungssystem 100 oder Teile davon, wie beispielsweise der Bearbeitungskopf 101, kann gemäß Ausführungsformen entlang einer Bearbeitungsrichtung 20 bewegbar sein. Die Bearbeitungsrichtung 20 kann eine Schweißrichtung und/oder eine Bewegungsrichtung des Laserbearbeitungssystems 100, wie beispielsweise des Bearbeitungskopf 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

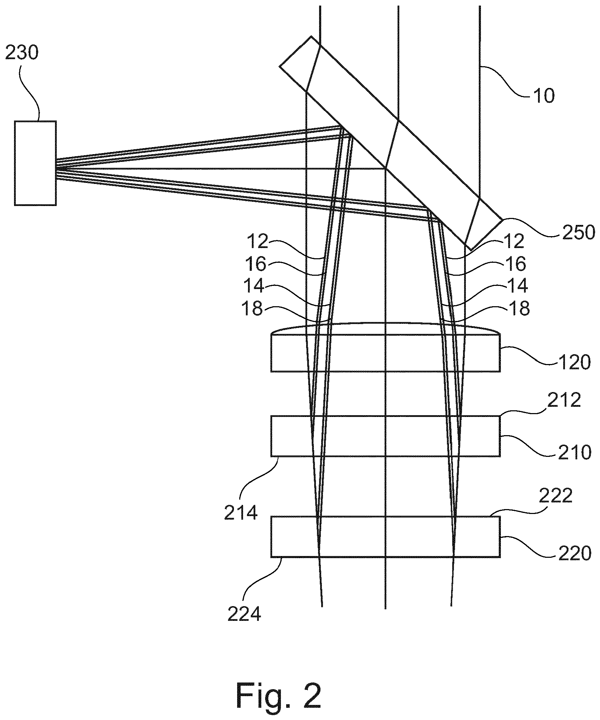

Das Laserbearbeitungssystem 100 bzw. der Laserbearbeitungskopf 101 umfasst die Vorrichtung 200 für eine Bestimmung einer Fokuslage des Laserstrahls 10 gemäß Ausführungsformen der vorliegenden Offenbarung. Die in Figuren 1 und 2 dargestellte Vorrichtung 200 umfasst ein erstes optisches Element 210, das für eine Reflektion eines ersten Substrahls 12 des Laserstrahls 10 eingerichtet ist, ein zweites optisches Element 220, das für eine Reflektion eines zweiten Substrahls 14 des Laserstrahls 10 (im Wesentlichen koaxial zum ersten Substrahl 12) eingerichtet ist, einen ortsauflösenden Sensor 230, auf den der erste Substrahl 12 und der zweite Substrahl 14 lenkbar sind, und eine Auswerteeinheit 240, die eingerichtet ist, um anhand der auf den ortsauflösenden Sensor 230 treffenden ersten und zweiten Substrahlen 12 und 14 eine Fokuslage F des Laserstrahls 10 zu bestimmen. Vorzugsweise sind das erste optische Element 210 und das zweite optische Element 220 im Strahlengang des Bearbeitungskopfes 101 parallel zueinander angeordnet. Die optischen Elemente 210 und 220 können im Strahlengang nachgelagert zu einer Fokussieroptik 120 angeordnet sein. Alternativ kann die optische Vorrichtung auch nur ein optisches Element 210 mit zwei Flächen umfassen, wobei die erste Fläche 212 für eine Reflektion des ersten Substrahls 12 des Laserstrahls 10 und die zweite Fläche 214, die der ersten Fläche 212 gegenüberliegt, für eine Reflexion des zweiten Substrahls 14 des Laserstrahls 10 eingerichtet sind. Es können auch mehr als zwei Rückreflexe zur Fokuslagenbestimmung verwendet werden, wie unten beschrieben wird.

Insbesondere ist das erste optische Element 210 im Strahlengang des Laserstrahls 10 angeordnet und koppelt einen Teil des Laserstrahls 10, der den ersten Substrahl 12 (und einen später beschriebenen optionalen dritten Substrahl) bildet, aus dem Laserstrahl 10 aus. Das zweite optische Element 220 ist ebenfalls im Strahlengang des Laserstrahls 10 angeordnet und koppelt einen anderen Teil des Laserstrahls 10, der den zweiten Substrahl 14 (und einen später beschriebenen optionalen vierten Substrahl) bildet, aus dem Laserstrahl 10 aus. Insbesondere koppelt das zweite optische Element 220 einen Teil des vom ersten optischen Element 210 transmittierten Laserstrahls, der den zweiten Substrahl 14 (und den später beschriebenen optionalen vierten Substrahl) bildet, aus.

Erfindungsgemäß werden mindestens ein optisches Element verwendet, um mindestens zwei im Wesentlichen koaxiale Rückreflexe aus dem Strahlengang des Laserstrahls auszukoppeln. Die koaxialen Rückreflexe werden auf einen ortsauflösenden Sensor gelenkt, wobei aus den vom ortsauflösenden Sensor gemessenen Daten eine Fokuslage des Laserstrahls in Echtzeit (online) bestimmt werden kann. Das optische Element kann beispielsweise ein Schutzglas sein, das nach der Fokussieroptik120 angeordnet ist. Damit kann ein System zur Lasermaterialbearbeitung bereitgestellt werden, das in bautechnisch kompakter und modularer Weise eine Fokuslagenmessung in Echtzeit und dadurch auch eine Regelung der Fokuslage in Echtzeit ermöglicht.

Die Fokuslage F des Laserstrahls 10 kann im Wesentlichen parallel zu einer optischen Achse 2 des Laserbearbeitungssystems 100 definiert sein bzw. bestimmt werden. In der Figur 1 ist die Fokuslage F beispielhaft oberhalb einer Oberfläche des Werkstücks 1 dargestellt. Das Laserbearbeitungssystem 100 kann gemäß Ausführungsformen einen Mechanismus zum Einstellen der Fokuslage umfassen. Basierend auf der durch die Vorrichtung 200 ermittelten Fokuslage F kann der Mechanismus die Fokuslage F ändern bzw. auf einen Sollwert einstellen. Zum Beispiel kann die Fokuslage F so eingestellt werden, dass sie in einem Bereich des Werkstücks 1, wie auf einer Oberfläche davon oder innerhalb des Werkstücks 1, liegt. Der Mechanismus zum Einstellen der Fokuslage F kann beispielsweise einen Stellantrieb umfassen, der zur Fokuslageregelung zumindest ein optisches Element der Strahlfuhrungsoptik verschiebt, wie beispielsweise die Kollimator-Optik 115 und/oder die Fokussier-Optik 120.

In einigen Ausführungsformen umfasst die Vorrichtung 200 einen Strahlteiler 250 im Strahlengang des Laserstrahls 10, der für eine Transmission des Laserstrahls 10 und eine Reflektion der Rückreflexe, also wenigstens des ersten Substrahls 12 und des zweiten Substrahls 14, zum ortsauflösenden Sensor 230 hin eingerichtet ist. Mit anderen Worten kann der Strahlteiler 250 dazu eingerichtet sein, koaxiale Rückreflexe von den optischen Elementen 210 und 220 auszukoppeln und zum ortsauflösenden Sensor 230 zu lenken. Typsicherweise ist der Strahlteiler 250 ein teildurchlässiger Spiegel. Der Strahlteiler 250 kann bezüglich der optischen Achse 2 des Laserbearbeitungssystems 100 verkippt angeordnet sein, um die Rückreflexe vom Strahlengang des Laserstrahls 10 wegzulenken. Beispielsweise kann der Strahlteiler 250 um etwa 45° bezüglich der optischen Achse 2 verkippt sein, um die Rückreflexe im Wesentlichen senkrecht zum Strahlengang des Laserstrahls 10 bzw. zur optischen Achse 2 des Laserbearbeitungssystems 100 wegzulenken und in Richtung des ortsauflösenden Sensors 230 zu richten. Typischerweise ist der Strahlteiler 250 im Strahlengang des Laserstrahls 10 zwischen der Fokussier-Optik 120 und der Kollimator-Optik 115 angeordnet.

Das erste optische Element 210 und das zweite optische Element 220 der Vorrichtung 200 können in einem Fokusbereich der Fokussier-Optik 120, also im Strahlengang des Laserstrahls 10 im Anschluss an die Fokussier-Optik 120, angeordnet sein. Insbesondere können das erste optische Element 210 und das zweite optische Element 220 zwischen der Fokussier-Optik 120 und der Fokuslage F angeordnet sein. Typischerweise sind das erste optische Element 210 und das zweite optische Element 220 zwischen der Fokussier-Optik 120 und einer Strahldüse 130 angeordnet, um das Innere des Bearbeitungskopfes 101 und insbesondere die Fokussier-Optik 120 vor Verschmutzungen zu schützen.

In einigen Ausführungsformen sind das erste optische Element 210 und/oder das zweite optische Element 220 transmissive optische Elemente. Das transmissive optische Element kann für eine Transmission eines ersten Teils des Laserstrahls 10 und eine Reflektion wenigstens eines zweiten Teils des Laserstrahls 10 eingerichtet sein. Der erste Teil des Laserstrahls 10 kann zur Materialbearbeitung auf das Werkstück 1 gelenkt werden. Der zweite Teil des Laserstrahls kann aus dem Strahlengang ausgekoppelt und für die Bestimmung der Fokuslage F des Laserstrahls 10 verwendet werden. Anders gesagt sind die Substrahlen des Laserstrahls ausgekoppelte Teile oder Strahlteile des Laserstrahls 10, der auch als "Hauptstrahl" bezeichnet wird.

Das erste optische Element 210 und das zweite optische Element 220 können aufeinanderfolgend im Strahlengang des Laserstrahls 10 angeordnet sein, und insbesondere unmittelbar aufeinanderfolgend. Unmittelbar aufeinanderfolgend bedeutet, dass keine weiteren optischen Elemente zwischen dem ersten optischen Element 210 und dem zweiten optischen Element 220 vorhanden oder angeordnet sind. Das erste optische Element 210 und das zweite optische Element 220 können insbesondere separate optische Elemente sein, die beabstandet voneinander entlang des Strahlengangs angeordnet sind. Durch die beiden separaten optischen Elemente können der erste Substrahl 12 und der zweite Substrahl 14 im Wesentlichen koaxial zueinander ausgerichtet sein.

Typischerweise sind das erste optische Element 210 und/oder das zweite optische Element 220 aus Glas, und können insbesondere Schutzgläser sein. Die Schutzgläser können strahlausgangsseitig an der Strahldüse 130 angeordnet sein. Die Schutzgläser können vorhanden sein, um die (optischen) Elemente innerhalb des Laserbearbeitungssystems, und insbesondere die Fokussier-Optik 120, vor Verschmutzungen zu schützen, die z.B. durch Spritzer oder Schmauch verursacht werden können.

Das erste optische Element 210 weist eine erste Fläche 212 und eine der ersten Fläche 212 gegenüberliegende zweite Fläche 214 auf. Die Flächen können Planflächen sein. Typischerweise verlaufen die erste Fläche 212 und die zweite Fläche 214 im Wesentlichen parallel zueinander. Der erste Substrahl 12 kann von der ersten Fläche 212 oder der zweiten Fläche 214 reflektiert werden. Das zweite optische Element 220 weist eine erste Fläche 222 und eine der ersten Fläche 222 gegenüberliegende zweite Fläche 224 auf. Die Flächen können Planflächen sein. Typischerweise verlaufen die erste Fläche 222 und die zweite Fläche 224 im Wesentlichen parallel zueinander. Der zweite Substrahl 14 kann von der ersten Fläche 222 oder der zweiten Fläche 224 reflektiert werden.

Die Flächen, von denen der erste Substrahl 12 und der zweite Substrahl 14 reflektiert werden, können gleich ausgerichtet sein. Beispielsweise können die Flächen eine obere bzw. erste und untere bzw. zweite Fläche ein und desselben optischen Elements umfassen. Im Fall von zwei optischen Elementen können die Flächen obere bzw. erste Flächen des ersten optischen Elements 210 und des zweiten optischen Elements 220 bezüglich einer Ausbreitungsrichtung des Laserstrahls 10, also von der Laservorrichtung 110 hin zum Werkstück 1, sein. In einem anderen Beispiel können die Flächen untere bzw. zweite Flächen des ersten optischen Elements 210 und des zweiten optischen Elements 220 sein.

Gemäß Ausführungsformen sind das erste optische Element 210 und/oder das zweite optische Element 220 im Wesentlichen senkrecht zur optischen Achse 2 des Laserbearbeitungssystems 100 ausgerichtet. Anders gesagt können das erste optische Element 210 und das zweite optische Element im Wesentlichen parallel zueinander ausgerichtet sein. Insbesondere können mindestens eine von der ersten Fläche 212 und der zweiten Fläche 214 des ersten optischen Elements 210 und/oder von der ersten Fläche 222 und der zweiten Fläche 224 des zweiten optischen Elements 220 im Wesentlichen senkrecht zur optischen Achse ausgerichtet sein. Die vorliegende Offenbarung ist jedoch nicht hierauf beschränkt und das erste optische Element 210 und/oder das zweite optische Element 220 können bezüglich der optischen Achse 2 verkippt sein oder Flächen aufweisen, die in einem Winkel ungleich 90° zur optischen Achse 2 ausgerichtet sind.

Als ortsauflösender Sensor 230 kann jeder Sensor eingesetzt werden, mit dem beispielsweise ein Durchmesser des auf den ortsauflösenden Sensor 230 auftreffenden Strahls, also der Substrahlen 12 bzw. 14, ermittelt werden kann. Beispielsweise wird als ortsauflösender Sensor 230 eine Kamera eingesetzt, deren Sensorfläche beispielsweise von einem CCD-Sensor gebildet wird.

Gemäß Ausführungsformen ist die Auswerteeinheit 240 eingerichtet, um basierend auf einer Lage und/oder einer Ausdehnung, und einem Durchmesser, wenigstens des ersten Substrahls 12 und des zweiten Substrahls 14 auf dem ortsauflösenden Sensor 230 die Fokuslage F des Laserstrahls 10 zu bestimmen. Beispielsweise kann die Auswerteeinheit 240 eingerichtet sein, um mittels eines Modells bzw. einer Modellfunktion durch den ortsauflösenden Sensor 230 gemessene Strahleigenschaften zu charakterisieren, um daraus die Fokuslage F des Laserstrahls 10 abzuleiten. Insbesondere kann aus einem Durchmesser des ersten Substrahls 12 und des zweiten Substrahls 14 mittels der Modellfunktion (z.B. durch einen Fit) die Fokuslage F bestimmt werden. Anders gesagt kann aus den Durchmessern die Fokuslage F berechnet werden.

Das Modell bzw. die Modellfunktion kann dabei robust bezüglich Fertigungstoleranzen sein, also wenn keine perfekte Konzentrizität von Strahldurchmessern vorhanden ist, oder wenn Schwankungen in den Restreflektionen von Beschichtungen und Abweichungen in den relevanten Dicken oder Abständen auftreten etc.

In manchen Ausführungsformen kann die Vorrichtung 200 eine Optik zum Abbilden der Rückreflexe, wie beispielsweise des ersten Substrahls 12 und des zweiten Substrahls 14, auf den ortsauflösenden Sensor 230 aufweisen.

In weiteren Ausführungsformen umfasst die Vorrichtung 200 optional wenigstens einen optischen Filter für die Rückreflexe, wie beispielsweise den ersten Substrahl 12 und den zweiten Substrahl 14. Der optischen Filter kann die Rückreflexe optisch filtern, so dass für die Detektion geeignete bzw. optimale Wellenlängen den ortsauflösenden Sensor 230 erreichen. Hierdurch kann beispielsweise ein Untergrund oder ein Rauschen im Sensorsignal reduziert werden. Der optische Filter kann auch einen Filter zur Anpassung einer Signalstärke für den ortsauflösenden Sensor 230 umfassen.

Figur 2 zeigt die Vorrichtung 200 zur Bestimmung der Fokuslage sowie die Fokussier-Optik 120 gemäß Ausführungsformen der vorliegenden Offenbarung.

Das erste optische Element 210 weist die erste Fläche 212 und die der ersten Fläche 212 gegenüberliegende zweite Fläche 214 auf. Das zweite optische Element 220 weist die erste Fläche 222 und die der ersten Fläche 222 gegenüberliegende zweite Fläche 224 auf. In einigen Ausführungsformen wird von jeder der beiden gegenüberliegenden Flächen des ersten bzw. zweiten optischen Elements jeweils ein Rückreflex (Substrahl) erzeugt, der auf den ortsauflösenden Sensor 230 gelenkt wird. Damit kann der Rückreflex von allen vier Planflächen der Schutzgläser vom Hauptstrahl mit Hilfe des Strahlteilers ausgekoppelt und (optional mit einer Abbildungsoptik) auf den ortsauflösenden Sensor gerichtet werden. Das Bild des ortsauflösenden Sensors kann mit Hilfe eines Modells (Funktion) basierend auf vier koaxialen Strahldurchmessern in der Auswerteeinheit ausgewertet werden, um die Fokuslage des Laserstrahls zu bestimmen.

Das erste optische Element 210 kann eingerichtet sein, um den ersten Substrahl 12 und einen dritten Substrahl 16 zu reflektieren. Der erste Substrahl 12 kann von der ersten Fläche 212 des ersten optischen Elements 210 reflektiert werden, und der dritte Substrahl 16 kann von der zweiten Fläche 214 des ersten optischen Elements 210 reflektiert werden. Das zweite optische Element 220 kann eingerichtet sein, um den zweiten Substrahl 14 und einen vierten Substrahl 18 zu reflektieren. Der zweite Substrahl 14 kann von der ersten Fläche 222 des zweiten optischen Elements 220 reflektiert werden, und der vierte Substrahl 18 kann von der zweiten Fläche 224 des zweiten optischen Elements 220 reflektiert werden.

Für die Bestimmung der Fokuslage können also wenigstens vier Rückreflexe der beiden optischen Elemente verwendet werden, nämlich der erste Substrahl 12 und der dritte Substrahl 16 des ersten optischen Elements 210 sowie der zweite Substrahl 14 und der vierte Substrahl 18 des zweiten optischen Elements 220. Insbesondere können die Durchmesser der vier Rückreflexe mittels der Modellfunktion ausgewertet werden, um die Fokuslage beispielsweise über einen Fit zu bestimmen. Der erste Substrahl 12, der zweite Substrahl 14, der dritte Substrahl 16 und der vierte Substrahl 18 können im Wesentlichen koaxial sein, und können insbesondere im Wesentlichen koaxial auf den ortsauflösenden Sensor treffen.

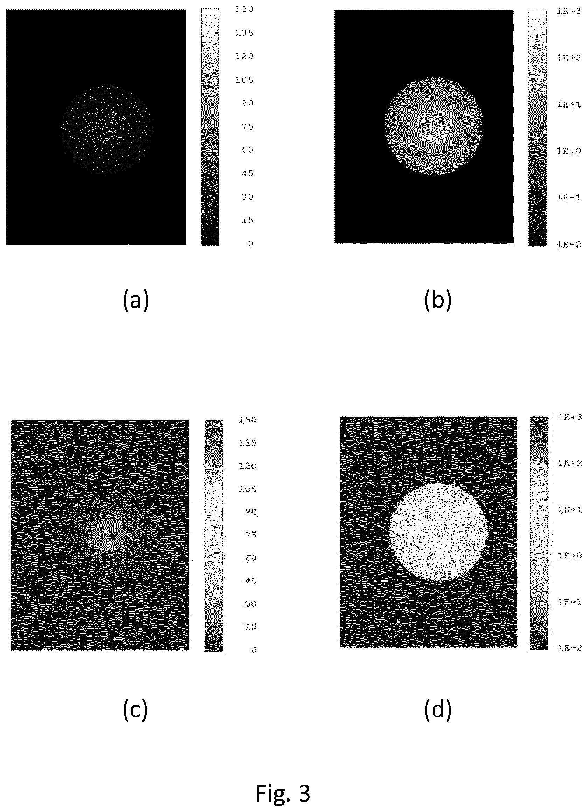

Figur 3 zeigt Simulationen von ausgekoppelten Rückreflexen des Laserstrahls, die mit einem ortsauflösenden Sensor oder Detektor aufgenommen werden. Die Darstellungen entsprechen der Intensitätsverteilung der Rückreflexe bzw. der Substrahlen, die überlagert auf den Sensor auftreffen, in mW/cm2 oder in willkürlichen Einheiten. Figur 3(a) zeigt eine umgekehrte Graustufendarstellung des simulierten Signals des ortsauflösenden Sensors auf einer linearen Skala. Figur 3(b) zeigt eine umgekehrte Graustufendarstellung des simulierten Signals des ortsauflösenden Sensors auf einer logarithmischen Skala. Figur 3(c) zeigt eine Falschfarbendarstellung des simulierten Signals auf einer linearen Skala. Figur 3(d) zeigt eine Falschfarbendarstellung des simulierten Signals auf einer logarithmischen Skala.

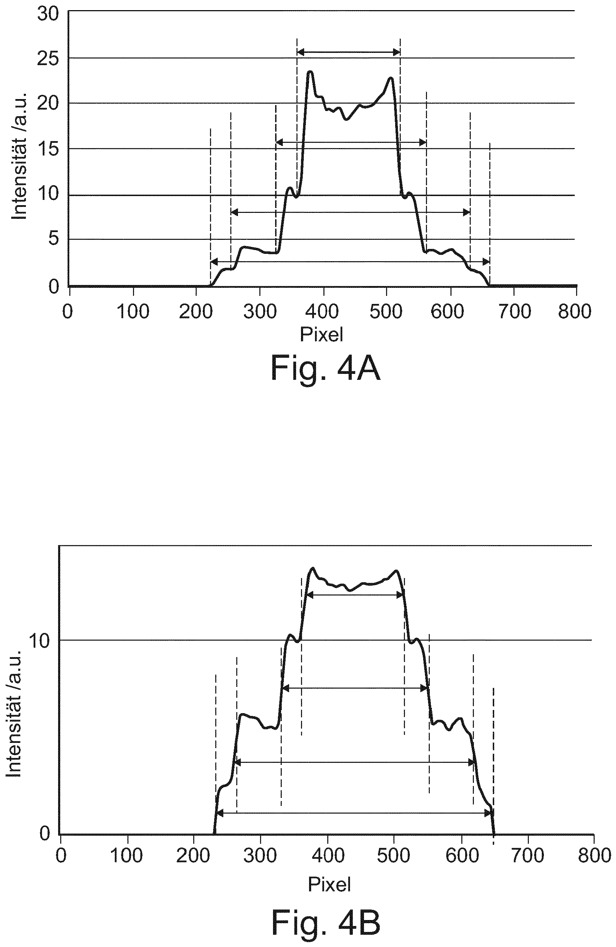

Figur 4 zeigt Auswertungen der Simulationen der Figur 3. Insbesondere sind Schnitte dargestellt, in denen die Durchmesser der Rückreflexe erkennbar sind. Insgesamt sind vier Durchmesser von vier Rückreflexen vorhanden, die von den vier Planflächen der beiden optischen Elemente erzeugt werden (Pfeile). Figur 4A zeigt eine lineare Skala, also die Auswertung der in den Figuren 3(a) und (c) gezeigten Simulationen. Figur 4B zeigt eine logarithmische Skala, also die Auswertung der in den Figuren 3(b) und (d) gezeigten Simulationen.

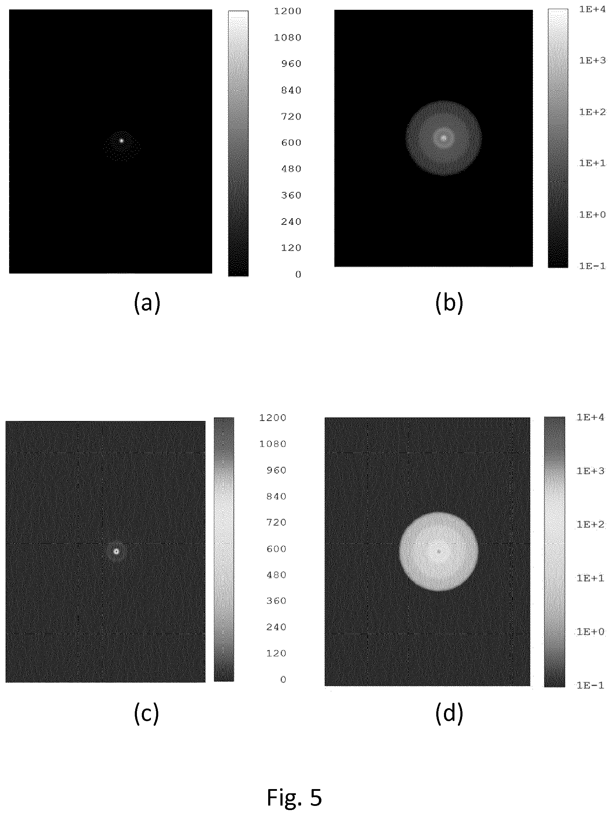

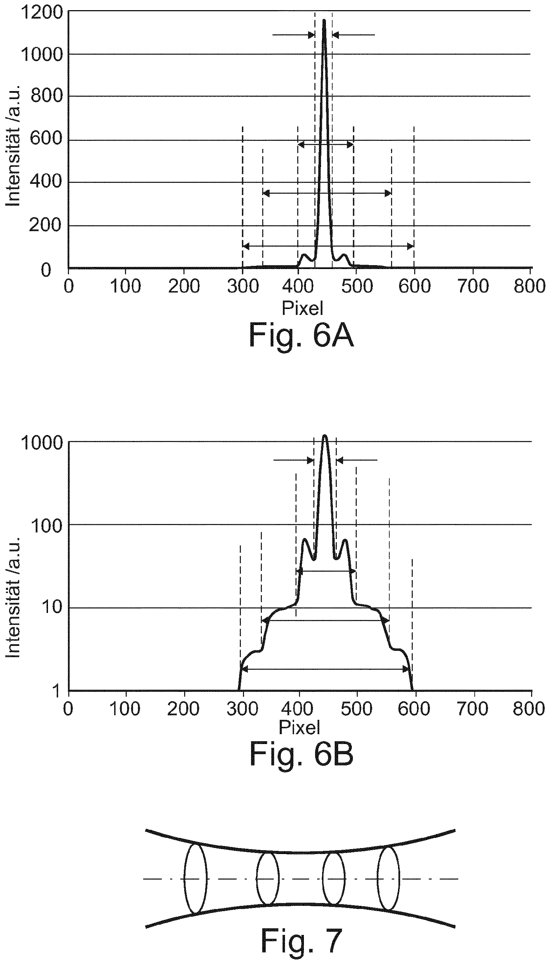

Figuren 5 und 6 zeigen Vergleichssimulationen für eine andere Fokuslage bzw. Kollimationslage wie die, die in den Figuren 3 und 4 dargestellten Simulationen verwendet wurde.

Figur 5 zeigt Simulationen von ausgekoppelten Rückreflexen des Laserstrahls, die mit einem ortsauflösenden Detektor aufgenommen werden. Die Darstellungen entsprechen der Intensitätsverteilung der auftreffenden Rückreflexe bzw. der auftreffenden Substrahlen in willkürlichen Einheiten. Figur 5(a) zeigt eine umgekehrte Graustufendarstellung des simulierten Signals auf einer linearen Skala (ähnlich zur Figur 3a). Figur 5(b) zeigt eine umgekehrte Graustufendarstellung des simulierten Signals auf einer logarithmischen Skala (ähnlich zur Figur 3b). Figur 5(c) zeigt eine Falschfarbendarstellung des simulierten Signals auf einer linearen Skala (ähnlich zur Figur 3c). Figur 5(d) zeigt eine Falschfarbendarstellung des simulierten Signals auf einer logarithmischen Skala (ähnlich zur Figur 3d).

Figur 6 zeigt Auswertungen der Simulationen der Figur 5. Insbesondere sind Schnitte der Simulationen dargestellt, in denen die Durchmesser der Rückreflexe erkennbar sind. Insgesamt sind vier Durchmesser von vier Rückreflexen vorhanden, die von den vier Planflächen der beiden optischen Elemente erzeugt werden. Figur 6A zeigt eine lineare Skala, also die Auswertung der in den Figuren 5(a) und (c) gezeigten Simulationen. Figur 6B zeigt eine logarithmische Skala, also die Auswertung der in den Figuren 5(b) und (d) gezeigten Simulationen.

Die Änderung des Strahldurchmessers wird in Abhängigkeit von der Strahlausbreitungsrichtung mathematisch mit der so genannten Strahlkaustik beschrieben. Figur 7 zeigt eine schematische Strahlkaustik eines Laserstrahls, wobei die mit Hilfe der Messdaten und eines Modells ermittelten Strahldurchmesser (entsprechend den Kreisen in Figur 7) mit Hilfe des Modells zu einer Strahlkaustik (die Einhüllende in Figur 4) gefittet werden, um den Strahl zur charakterisieren, und insbesondere zur Bestimmung der Fokuslage, d.h. also der Lage des kleinsten Durchmessers des Strahls. Das Modell beschreibt beispielsweise die Differenz zwischen den optischen Wegen der mindestens zwei Rückreflexe. Wenn eine Abbildungsoptik vor dem Sensor 230 angeordnet ist, kann dies im Modell berücksichtigt sein.

Erfindungsgemäß wird mindestens ein optisches Element verwendet, um mindestens zwei im Wesentlichen koaxiale Rückreflexe aus dem Laserstrahl auszukoppeln. Alternativ können auch zwei optische Elemente verwendet werden, um mindestens zwei im Wesentlichen koaxiale Rückreflexe bzw. Substrahlen zu erzeugen. Als optisches Element kann ein Schutzglas verwendet werden. Dadurch wird eine einfache modulare Integration in einen Laserbearbeitungskopf ermöglicht. Zur Auskopplung kann ein Strahlteiler verwendet werden. Die koaxialen Rückreflexe werden auf einen ortsauflösenden Sensor gelenkt, wobei aus den vom ortsauflösenden Sensor gemessenen Daten eine Fokuslage des Laserstrahls in Echtzeit (online) bestimmt werden kann. Insbesondere kann ein Modell bzw. eine Modellfunktion verwendet werden, um die Strahlkaustik auszuwerten und einen Schluss auf die Fokuslage zu ziehen.

## Patentansprüche

1. Vorrichtung (200) zur Bestimmung einer Fokuslage (F) eines Laserstrahls (10) in einem Laserbearbeitungssystem (100), umfassend:
mindestens zwei Flächen von mindestens einem optischen Element (210, 220), die jeweils für eine Reflektion eines Teils des Laserstrahls (10) zum Auskoppeln eines Substrahls (12, 14, 16, 18) eingerichtet sind, wobei die wenigstens zwei Substrahlen einschließlich eines ersten Substrahls (12) und eines zweiten Substrahls (14) im Wesentlichen koaxial überlagert sind;
einen ortsauflösenden Sensor (230) zur Erfassung einer Intensitätsverteilung der überlagerten Substrahlen (12, 14); und
eine Auswerteeinheit (240), die eingerichtet ist, um basierend auf der vom ortsauflösenden Sensor (230) erfassten Intensitätsverteilung der überlagerten Substrahlen (12, 14) Durchmesser der Substrahlen (12, 14) zu bestimmen, und basierend auf den Durchmessern der Substrahlen (12, 14) eine Fokuslage (F) des Laserstrahls (10) zu bestimmen.

2. Die Vorrichtung (200) nach Anspruch 1, wobei das mindestens eine optische Element (210, 220) ein transmissives optisches Element und/oder ein Schutzglas ist.

3. Die Vorrichtung (200) nach Anspruch 1 oder 2, wobei das mindestens eine optische Element (210, 220) senkrecht zu einer optischen Achse (2) des Laserbearbeitungssystems (100) angeordnet ist.

4. Die Vorrichtung (200) nach einem der vorausgehenden Ansprüche, wobei die eine Fläche (212) und die andere Fläche (214, 222, 224) senkrecht zu einer optischen Achse (2) des Laserbearbeitungssystems (100) und/oder in einem Fokusbereich des Laserstrahls (10) angeordnet sind.

5. Die Vorrichtung (200) nach einem der vorausgehenden Ansprüche, wobei eine Anzahl der Substrahlen und/oder eine Differenz zwischen optischen Weglängen der Substrahlen bekannt ist.

6. Die Vorrichtung (200) nach einem der vorausgehenden Ansprüche, wobei das mindestens eine optische Element (210, 220) ein erstes optisches Element (210) umfasst, das eine erste Fläche (212) aufweist, wobei der erste Substrahl (12) von der ersten Fläche (212) des ersten optischen Elements (210) reflektiert wird, und/oder
wobei das mindestens eine optische Element (210, 220) ein zweites optisches Element (220) umfasst, das eine erste Fläche (222) aufweist, wobei der zweite Substrahl (14) von der ersten Fläche (222) des zweiten optischen Elements (220) reflektiert wird.

7. Die Vorrichtung (200) nach Anspruch 6, wobei das erste optische Element (210) ferner eine der ersten Fläche (212) gegenüberliegende zweite Fläche (214) umfasst, die eingerichtet ist, einen dritten Substrahl (16) zu reflektieren, und/oder
wobei das zweite optische Element (220) ferner eine der ersten Fläche (222) gegenüberliegende zweite Fläche (224) umfasst, die eingerichtet ist, einen vierten Substrahl (18) zu reflektieren.

8. Die Vorrichtung (200) nach einem der vorausgehenden Ansprüche, weiter umfassend einen Strahlteiler (250), der für eine Transmission des Laserstrahls (10) zu einem Werkstück und für eine Reflektion der Substrahlen (12, 14) zum ortsauflösenden Sensor (230) hin eingerichtet ist.

9. Die Vorrichtung (200) nach einem der vorausgehenden Ansprüche, weiter umfassend eine Optik zum Abbilden der Substrahlen (12, 14) auf den ortsauflösenden Sensor (230).

10. Die Vorrichtung (200) nach einem der vorausgehenden Ansprüche, weiter umfassend wenigstens einen optischen Filter für die Substrahlen (12, 14), der zwischen dem mindestens einen optischen Element (210, 220) und dem ortsauflösenden Sensor (230) angeordnet ist.

11. Laserbearbeitungssystem (100), umfassend:
eine Laservorrichtung (110) zum Bereitstellen eines Laserstrahls (10);
eine Fokussier-Optik (120) zum Fokussieren des Laserstrahls (10) auf ein Werkstück (1); und
die Vorrichtung (200) nach einem der vorausgehenden Ansprüche.

12. Das Laserbearbeitungssystem (100) nach Anspruch 11, wobei das mindestens eine optische Element (210, 220) in einem Strahlengang des Laserbearbeitungssystems (100) der Fokussier-Optik (120) nachgelagert angeordnet ist.

13. Das Laserbearbeitungssystem (100) nach Anspruch 12, wobei das Laserbearbeitungssystem (100) einen Laserschneidkopf oder Laserschweißkopf (101) umfasst oder ein Laserschneidkopf oder Laserschweißkopf (101) ist.

14. Verfahren zur Bestimmung einer Fokuslage (F) eines Laserstrahls (10) in einem Laserbearbeitungssystem (100), umfassend:
Auskoppeln zumindest eines ersten und eines zweiten Substrahls (12, 14) von mindestens einem optischen Element (120, 220), das in einem Strahlengang des Laserstrahls (10) angeordnet ist wobei der erste Substrahl (12) und der zweite Substrahl (14) im Wesentlichen koaxial überlagert sind;
Erfassen einer ortsaufgelösten Intensitätsverteilung der überlagerten Substrahlen (12, 14);
Bestimmen von Durchmessern der Substrahlen (12, 14) basierend auf der erfassten ortsaufgelösten Intensitätsverteilung der überlagerten Substrahlen (12, 14); und
Bestimmen einer Fokuslage (F) des Laserstrahls (10) basierend auf den bestimmten Durchmessern der Substrahlen (12, 14).

## Claims

1. A device (200) for determining a focus position (F) of a laser beam (10) in a laser machining system (100), comprising:
at least two surfaces of at least one optical element (210, 220), each configured to reflect a portion of the laser beam (10) for outcoupling a sub-beam (12, 14, 16, 18), the at least two sub-beams including a first sub-beam (12) and a second sub-beam (14) being superimposed substantially coaxially;
a spatially-resolving sensor (230) for detecting an intensity distribution of the superimposed sub-beams (12, 14); and
an evaluation unit (240) configured to determine diameters of the superimposed sub-beams (12, 14) based on the intensity distribution of the superimposed sub-beams (12, 14) detected by the spatially-resolving sensor (230) and to determine a focus position (F) of the laser beam (10) based on the diameters of the sub-beams (12, 14).

2. The device (200) according to claim 1, wherein the at least one optical element (210, 220) is a transmissive optical element and/or a protective glass.

3. The device (200) according to claim 1 or 2, wherein the at least one optical element (210, 220) is arranged perpendicular to an optical axis (2) of the laser machining system (100).

4. The device (200) according to one of the preceding claims, wherein the one surface (212) and the other surface (214, 222, 224) are arranged perpendicular to an optical axis (2) of the laser machining system (100) and/or in a focus region of the laser beam (10).

5. The device (200) according to one of the preceding claims, wherein a number of the sub-beams and/or a difference between optical path lengths of the sub-beams is known.

6. The device (200) according to one of the preceding claims, wherein the at least one optical element (210, 220) comprises a first optical element (210) having a first surface (212), wherein the first sub-beam (12) is reflected from the first surface (212) of the first optical element (210), and/or
wherein the at least one optical element (210, 220) comprises a second optical element (220) having a first surface (222), wherein the second sub-beam (14) is reflected from the first surface (222) of the second optical element (220).

7. The device (200) of claim 6, wherein the first optical element (210) further comprises a second surface (214) which is opposite the first surface (212) and configured to reflect a third sub-beam (16), and/or
wherein the second optical element (220) further comprises a second surface (224) which is opposite the first surface (222) and configured to reflect a fourth sub-beam (18).

8. The device (200) according to one of the preceding claims, further comprising a beam splitter (250) configured to transmit the laser beam (10) to a workpiece and to reflect the sub-beams (12, 14) to the spatially-resolving sensor (230).

9. The device (200) according to one of the preceding claims, further comprising an optics for imaging the sub-beams (12, 14) onto the spatially-resolving sensor (230).

10. The device (200) according to one of the preceding claims, further comprising at least one optical filter for the sub-beams (12, 14), the at least one optical filter being arranged between the at least one optical element (210, 220) and the spatially-resolving sensor (230).

11. A laser machining system (100) comprising:
a laser device (110) for providing a laser beam (10);
a focusing optics (120) for focusing the laser beam (10) on a workpiece (1); and
the device (200) according to one of the preceding claims.

12. The laser machining system (100) according to claim 11, wherein the at least one optical element (210, 220) is arranged downstream of the focusing optics (120) in a beam path of the laser machining system (100).

13. The laser machining system (100) according to claim 12, wherein the laser machining system (100) comprises a laser cutting head or laser welding head (101) or is a laser cutting head or laser welding head (101).

14. A method for determining a focus position (F) of a laser beam (10) in a laser machining system (100), comprising:
outcoupling at least a first and a second sub-beam (12, 14) from at least one optical element (120, 220) which is arranged in a beam path of the laser beam (10), wherein the first sub-beam (12) and the second sub-beam (14) are superimposed substantially coaxially;
detecting a spatially-resolved intensity distribution of the superimposed sub-beams (12, 14);
determining diameters of the sub-beams (12, 14) based on the spatially-resolved intensity distribution of the superimposed sub-beams (12, 14); and
determining a focus position (F) of the laser beam (10) based on the detected diameters of the sub-beams (12, 14).

## Revendications

1. Dispositif (200) pour déterminer une position focale (F) d'un faisceau laser (10) dans un système d'usinage au laser (100), comprenant :
au moins deux surfaces d'au moins un élément optique (210, 220), qui sont respectivement configurées pour réfléchir une partie du faisceau laser (10) pour découpler un sous-faisceau (12, 14, 16, 18), dans lequel les au moins deux sous-faisceaux incluant un premier sous-faisceau (12) et un deuxième sous-faisceau (14) sont superposés de manière sensiblement coaxiale ;
un capteur à résolution spatiale (230) pour détecter une répartition d'intensité des sous-faisceaux (12, 14) superposés ; et
une unité d'évaluation (240) configurée pour déterminer le diamètre des sous-faisceaux (12, 14) sur la base de la répartition d'intensité des sous-faisceaux (12, 14) superposés détectée par le capteur à résolution spatiale (230), et pour déterminer une position focale (F) du faisceau laser (10) sur la base des diamètres des sous-faisceaux (12, 14).

2. Dispositif (200) selon la revendication 1, dans lequel le au moins un élément optique (210, 220) est un élément optique transmissif et/ou un verre de protection.

3. Dispositif (200) selon la revendication 1 ou 2, dans lequel le au moins un élément optique (210, 220) est agencé perpendiculairement à un axe optique (2) du système d'usinage au laser (100).

4. Dispositif (200) selon l'une des revendications précédentes, dans lequel la première surface (212) et la seconde surface (214, 222, 224) sont agencées perpendiculairement à un axe optique (2) du système d'usinage au laser (100) et/ou dans une zone de foyer du faisceau laser (10).

5. Dispositif (200) selon l'une des revendications précédentes, dans lequel un nombre de sous-faisceaux et/ou une différence entre des longueurs de trajet optique des sous-faisceaux est connu.

6. Dispositif (200) selon l'une des revendications précédentes, dans lequel le au moins un élément optique (210, 220) comprend un premier élément optique (210) comportant une première surface (212), dans lequel le premier sous-faisceau (12) est réfléchi par la première surface (212) du premier élément optique (210), et/ou
dans lequel le au moins un élément optique (210, 220) comporte un second élément optique (220) comportant une première surface (222), dans lequel le deuxième sous-faisceau (14) est réfléchi par la première surface (222) du second élément optique (220).

7. Dispositif (200) selon la revendication 6, dans lequel le premier élément optique (210) comprend en outre une seconde surface (214) opposée à la première surface (212), qui est configurée pour réfléchir un troisième sous-faisceau (16), et/ou
dans lequel le second élément optique (220) comprend en outre une seconde surface (224) opposée à la première surface (222), qui est configurée pour réfléchir un quatrième sous-faisceau (18).

8. Dispositif (200) selon l'une des revendications précédentes, comprenant en outre un séparateur de faisceau (250) configuré pour transmettre le faisceau laser (10) vers une pièce et pour réfléchir les sous-faisceaux (12, 14) vers le capteur à résolution spatiale (230).

9. Dispositif (200) selon l'une des revendications précédentes, comprenant en outre une optique pour former une image des sous-faisceaux (12, 14) sur le capteur à résolution spatiale (230).

10. Dispositif (200) selon l'une des revendications précédentes, comprenant en outre au moins un filtre optique pour les sous-faisceaux (12, 14), qui est agencé entre le au moins un élément optique (210, 220) et le capteur à résolution spatiale (230).

11. Système d'usinage au laser (100), comprenant :
un dispositif à laser (110) pour délivrer un faisceau laser (10) ;
une optique de focalisation (120) pour focaliser le faisceau laser (10) sur une pièce (1) ; et
le dispositif (200) selon l'une des revendications précédentes.

12. Système d'usinage au laser (100) selon la revendication 11, dans lequel le au moins un élément optique (210, 220) est agencé en aval de l'optique de focalisation (120) dans un trajet de faisceau du système d'usinage au laser (100).

13. Système d'usinage au laser (100) selon la revendication 12, dans lequel le système d'usinage au laser (100) comprend une tête de coupe laser ou une tête de soudage laser (101), ou est une tête de coupe laser ou une tête de soudage laser (101).

14. Procédé pour déterminer une position focale (F) d'un faisceau laser (10) dans un système d'usinage au laser (100), comprenant les étapes consistant à :
découpler au moins un premier et un deuxième sous-faisceau (12, 14) provenant d'au moins un élément optique (120, 220) agencé dans un trajet de faisceau du faisceau laser (10), dans lequel le premier sous-faisceau (12) et le deuxième sous-faisceau (14) sont superposés de manière sensiblement coaxiale ;
détecter une répartition d'intensité spatialement résolue des sous-faisceaux (12, 14) superposés ;
déterminer des diamètres des sous-faisceaux (12, 14) sur la base de la répartition d'intensité spatialement résolue détectée des sous-faisceaux (12, 14) superposés ; et
déterminer une position focale (F) du faisceau laser (10) sur la base des diamètres déterminés des sous-faisceaux (12, 14).
